# EUROPÄISCHE PATENTSCHRIFT

(11) **EP 1 877 351 B1**
(45) Veröffentlichungstag und Bekanntmachung des Hinweises auf die Patenterteilung: **29.10.2008**
(21) Anmeldenummer: 05801058.8
(22) Anmeldetag: 14.11.2005
(51) Int. Cl.: C03C 23/00

(54) **VERFAHREN UND VORRICHTUNG ZUM STREIFEN- UND FLÄCHENFÖRMIGEN BEARBEITEN VON OBERFLÄCHEN VON GLASSCHEIBEN**
METHOD AND DEVICE FOR STRIP AND FLAT-SHAPING MACHINING SURFACES OF GLASS PANES
PROCEDE ET DISPOSITIF POUR USINER DES SURFACES DE PLAQUES DE VERRE, DE MANIERE A SUPPRIMER DES BANDES DE MATIERE ET DES ZONES DE FORME DIFFERENTE

(30) Priorität: 19.11.2004 CH 19122004
(43) Veröffentlichungstag der Anmeldung: 16.01.2008
(73) Patentinhaber: Vetrotech Saint-Gobain (International) AG, 3014 Bern (CH)
(72) Erfinder: GELDERIE, UDO, 52136 Würselen (DE); MUELLER, Christian, Edgewood, WA 98371 (US); SCHWANKHAUS, Norbert, 52499 Baeswiler (DE); TRIEBS, Friedrich, 52076 Aaachen (DE)
(74) Vertreter: Bruderer, Werner
(86) Internationale Anmeldenummer: PCT/CH2005/000670
(87) Internationale Veröffentlichungsnummer: WO 2006/053455

(56) Entgegenhaltungen:
- EP-A- 1 251 108
- US-A- 4 515 652
- US-A- 5 364 434
- US-A- 5 626 911
- US-A1- 2001 000 206
- US-B1- 6 238 582

## Beschreibung

Die Erfindung betrifft ein Verfahren zum streifen- und flächenförmigen Bearbeiten, insbesondere zum teilweisen Entfernen von organischen und anorganischen Beschichtungen an Oberflächen von Glasscheiben, wobei eine Glasscheibe mit einer mindestens einseitigen Oberflächenbeschichtung in eine Bearbeitungs- und Verschiebeeinrichtung eingelegt wird, mit einer Plasmadüse ein Plasmastrahl erzeugt und die Plasmadüse über die Oberfläche der Glasscheibe bewegt wird, dieser Plasmastrahl gegen den Oberflächenbereich der Glasscheibe mit der zu entfernenden Beschichtung gerichtet und die Beschichtung durch den Plasmastrahl mindestens teilweise entfernt wird. Sie betrifft auch eine Vorrichtung zur Durchführung des Verfahrens mit einer Bearbeitungs- und Verschiebeeinrichtung mit einer Stützebene für eine Breitseite der Glasscheibe und einer Bewegungs- und Trägereinrichtung für mindestens eine Plasmadüse zur Erzeugung eines Plasmastrahls, wobei die Plasmadüse eine gegen eine Breitseiten-Oberfläche der Glasscheibe gerichtete Frontfläche mit einer Austrittsöffnung für den Plasmastrahl aufweist.

Bekannte Verbundgläser bestehen aus mindestens zwei Glasscheiben, welche parallel zueinander angeordnet sind und im Randbereich durch einen Abstandhalter miteinander verbunden sind. Bei Isolier-Verbundgläsern ist sehr häufig mindestens eine der Glasscheiben an der nach innen gerichteten Seite mit einer Beschichtung versehen. Diese Beschichtung dient in bekannter Weise der Verbesserung der Funktionen, indem beispielsweise Wärme- oder Lichtstrahlung reflektiert werden. Bei Brandschutz-Verbundgläsern werden teilweise die gleichen Beschichtungen wie bei Isolier-Verbundgläsern verwendet. Es finden beispielsweise organische oder anorganische Schichten Verwendung. Diese Beschichtung hat beispielsweise die Aufgabe, im Brandfall eine gute Trennung der Glasbruchstücke von der Brandschutzmasse zu ermöglichen. Bei Verbundgläsern, welche aus mehr als zwei Glasscheiben bestehen, sind in einigen Fällen die Glasscheiben, welche sich im Innenraum befinden, auch beidseitig beschichtet. Die im Randereich eingesetzten Abstandhalter zwischen den Glasscheiben bestehen aus Kunststoff- oder Metallprofilen oder aus einem Strang aus elastischem Abstandhaltermaterial. Die Profile werden mittels eines Randverbundklebers oder selbstklebenden Eigenschaften mit den Glasscheiben verbunden. Das Abstandhaltermaterial weist zumeist selbstklebende Eigenschaften auf. Zusätzlich zu den Abstandhalter-Profilen oder dem Strang aus Abstandhaltermaterial wird häufig auch noch ein Strang aus Dichtungsmaterial eingebracht. Die bekannten Randverbundkleber und das haftende Abstandhaltermaterial sind für eine gute Haftung auf der Glasoberfläche optimiert und ausgelegt. Sie haften aber nur ungenügend oder gar nicht auf den Beschichtungen oder gewährleisten keine optimale Abdichtung gegen den Innenraum aufgrund oxidierender Eigenschaften einiger Beschichtungen. Die Beschichtungen müssen deshalb überall dort, wo Kleberverbindungen oder aus anderen Gründen der Zugang zur "reinen" Glasfläche vorgesehen sind, wieder entfernt werden. Das teilweise Entfernen der Beschichtungen kann dabei in bekannter Weise mit Hilfe einer Gasflamme oder durch geeignete mechanische Einrichtungen erfolgen, z.B. mit Hilfe einer Schleifscheibe.

Aus DE-C1-3403682 sind ein Verfahren und eine Vorrichtung bekannt, welche das streifenförmige Entfernen von Beschichtungen an Glasscheiben für Isolier-Verbundgläser betreffen. Bei den hier beschriebenen Glasscheiben ist einseitig eine teilreflektierende Mehrfachschicht des Typs Metalloxyd-Metall-Metalloxyd aufgebracht. Zum streifenweisen Entfernen der Mehrfachschicht entlang den Scheibenrändern ist ein Gasbrenner mit der Schneideinrichtung gekoppelt, welcher die Beschichtung im Randbereich abbrennt. Das streifenweise Entfernen der Beschichtung erfolgt hier gleichzeitig mit dem Zuschneiden der Glasscheiben auf die gewünschte Grösse. Diese Anordnung hat den Nachteil, dass beidseitig beschichtete Glasscheiben, bei welchen auf beiden Seiten ein streifenförmiger Bereich der Beschichtung entfernt werden soll, um 180° gewendet werden müssen. Anschliessend müssen sie ein zweites Mal durch eine entsprechende Anlage mit einem Brenner zum Entfernen der Beschichtung geführt werden. Dieser Vorgang ist sehr aufwendig und zeitintensiv. Einseitig beschichtete Glasscheiben müssen immer so in die Entschichtungs-Einrichtung eingebracht werden, dass die beschichtete Glasseite gegen die Vorrichtung mit dem Gasbrenner gerichtet ist. Ein Teil der Glasscheiben muss somit vor der Bearbeitung mit entsprechendem Aufwand gewendet werden. Für den nachfolgenden Zusammenbau mehrerer Glasscheiben zu einem Verbundglas muss wiederum jedes zweite Glas gewendet werden. Zudem kann das Abbrennen der Beschichtung nur mit beschränkter Geschwindigkeit erfolgen.

Eine weitere Lösung zum teilweisen Entfernen von Beschichtungen an Glasscheibe ist aus WO-A-0119745 bekannt. Dabei handelt es sich um eine Vorrichtung zum teilweisen Entfernen von wasserabstossenden Beschichtungen an Autoscheiben. An Stelle eines Gasbrenners wird ein Plasmabrenner zur Verwendung vorgeschlagen. Ein Plasmastrahl weist gegenüber einer normalen Gasflamme einen wesentlich genauer definierten Strahlquerschnitt auf und es können auch kleinere Strahlquerschnitte definiert werden. Auch hier besteht der Nachteil, dass Glasscheiben, welche an beiden Breitseiten beschichtet sind, gewendet werden müssen und zweimal durch die Anlage geführt werden müssen, wenn die Beschichtung an beiden Seiten teilweise entfernt werden soll. Zudem besteht bei der Anwendung eines Plasmastrahls das Problem, dass der Abstand zwischen der Plasmadüse und der Oberfläche der Glasscheiben relativ genau eingehalten werden muss. Wenn der Abstand zu klein ist, kann der Plasmastrahl erlöschen oder es resultiert ein ungenügendes Resultat des Entschichtungsvorganges. Wenn der Abstand zu gross wird, ist die Entschichtung ebenfalls ungenügend und es bleiben Reste der Beschichtung zurück. Dies führt zu Störungen und zu Ausschuss bei der Produktion von Glasscheiben mit teilweise entfernter Beschichtung. Zu dieser bekannten Vorrichtung wird keine Lösung angegeben, wie der Abstand zwischen der Plasmadüse und der Oberfläche der Glasscheibe genau eingehalten werden kann.

Es ist deshalb Aufgabe der vorliegenden Erfindung, ein Verfahren und eine Vorrichtung zu schaffen, mit welchen organische und anorganischen Beschichtungen an Oberflächen von Glasplatten streifen- und flächenförmig entfernt werden können, wobei die Glasscheiben vor und nach der Bearbeitung nicht gewendet werden müssen, das Entfernen der Beschichtung sowohl nur einseitig als auch nacheinander beidseitig oder gleichzeitig beidseitig erfolgen kann, die Entfernung der Beschichtung an einem beliebigen Flächenbereich einer Glasscheibe bewirkt werden kann und gleichzeitig die Einhaltung des optimalen Abstandes zwischen jeder Plasmadüse und den Breitseiten-Oberflächen gewährleistet wird.

Diese Aufgabe wird bei einem Verfahren nach dem Oberbegriff des Patentanspruches 1 erfindungsgemäss durch die kennzeichnenden Merkmale dieses Patentanspruches und bei einer Vorrichtung nach dem Oberbegriff des Patentanspruches 6 nach den kennzeichnenden Merkmalen dieses Patentanspruches 6 gelöst. Vorteilhafte Weiterbildungen der Erfindung ergeben sich nach den Merkmalen der abhängigen Patentansprüche.

Beim erfindungsgemässen Verfahren wird im Bereiche der Glasscheibenoberfläche, welche entschichtet werden soll, mindestens ein Paar von Plasmadüsen angeordnet, und die Austrittsöffnungen für den Plasmastrahl werden gegeneinander und gleichzeitig je gegen eine von sich gegenüberliegenden Breitseiten-Oberflächen der Glasscheibe gerichtet. Die beiden Düsen eines Paares von Plasmadüsen werden gemeinsam gesteuert und betrieben. Wahlweise wird aus einer der beiden Düsen des Düsenpaars ein Bereich einer Oberfläche oder aus beiden Düsen gleichzeitig zwei Bereiche von zwei Oberflächen mit einem Plasmastrahl beaufschlagt. Dabei wird in dem vom Plasmastrahl beaufschlagten Bereich der Oberflächen die Beschichtung entfernt und gleichzeitig die Glasoberfläche aktiviert. Durch die Anordnung von mindestens einem Paar von Plasmadüsen und dadurch, dass die beiden Plasmastrahlen gegeneinander gerichtet werden, kann die Glasscheibe zwischen zwei Plasmastrahlen hindurchgeführt werden oder das Paar von Plasmadüsen kann beidseits der Glasscheibe bewegt werden. Dabei werden die beiden Düsen eines Paares von Plasmadüsen gemeinsam gesteuert und betrieben und es kann nach Bedarf eine der beiden Düsen oder beide Düsen gleichzeitig in Betrieb gesetzt werden. Wenn eine Glasscheibe nur einseitig beschichtet ist, wird nur diejenige Düse eines Paares in Betrieb gesetzt, gegen welche die beschichtete Oberfläche gerichtet ist. Dabei können die durch die Anlage geführten Glasscheiben in beliebiger Weise auf der Vorderseite oder der Rückseite beschichtet sein. Je nach Bedarf wird die Düse auf der Vorderseite oder die Düse auf der Rückseite in Betrieb gesetzt und die entsprechende Oberfläche mit dem Plasmastrahl beaufschlagt. Es ist somit nicht mehr notwendig, die Glasscheiben vor dem Einbringen in die Anlage so zu wenden, dass die beschichtete Oberfläche immer in die gleiche Richtung gerichtet ist. Auch nach dem Verlassen der Anlage müssen die teilweise entschichteten Glasscheiben nicht mehr gewendet werden, da sie bereits in der richtigen Position in die Anlage eingebracht werden können und anschliessend direkt mit anderen Glasscheiben zu einem Verbundglas zusammengefügt werden können. Glasscheiben, welche an beiden Breitseiten-Oberflächen beschichtet sind, können in einem Arbeitsgang beidseitig entschichtet werden und müssen somit auch nicht mehr gewendet und ein zweites Mal durch die Anlage geführt werden. Dieses Bearbeitungsverfahren führt zu einer Reduktion von Bearbeitungsschritten, da das Wenden der Glasscheiben und das mehrmalige Durchfahren der Anlage entfällt.

Eine zweckmässige Ausgestaltung des Verfahrens sieht vor, dass die beiden Plasmadüsen eines Paares auf eine gemeinsame Achse ausgerichtet und auf dieser gemeinsamen Achse mit einem vorgegebenen Abstand zueinander angeordnet werden. Erfindungsgemäss wird weiter vorgeschlagen, dass während der Verschiebung der Glasscheibe durch die Anlage und/oder der Bewegung des Düsenpaares entlang der Glasscheibe Veränderungen der Position der Breitseiten-oberflächen der Glasscheibe, im Bereiche zwischen den Plasmadüsen, mittels Abstandsensoren festgestellt werden. Abhängig von diesen Positionsveränderungen wird das Paar von Plasmadüsen jeweils etwa rechtwinklig zur Glasscheibe in Richtung der Positionsveränderungen der Glasscheibenoberflächen verschoben. Diese Verfahrensschritte ermöglichen eine einfache Einstellung und Korrektur des Abstandes zwischen den Oberflächen der Glasscheibe und den Plasmadüsen. Durch die gleichzeitige Verschiebung der beiden Düsen eines Düsenpaares wird auch gewährleistet, dass der Abstand der Düsen zu beiden Oberflächen einer Glasscheibe immer optimal ist. Verkrümmungen der Glasscheibe oder Unebenheiten auf der Oberfläche können dadurch ausgeglichen werden, aber teilweise auch Abweichungen der Position einer Glasscheibe, wenn diese nicht optimal durch die Anlage geführt wird.

In weiterer Ausbildung der Erfindung sieht das Verfahren vor, dass die Verschiebung des Paares von Plasmadüsen nur erfolgt, wenn die Veränderung der Position der Breitseiten-Oberflächen der Glasscheibe einen vorbestimmten Verschiebewert überschreitet. Dabei wird der vorbestimmte Verschiebewert dadurch ermittelt, dass der Wert in Bezug zu einer neutralen Position der Glasscheibe, aus der Differenz zwischen einem maximal zulässigen Arbeitsabstand zwischen der Frontfläche der Plasmadüse und der Scheibenoberfläche und einem minimal zulässigen Arbeitsabstand zwischen der Frontfläche der Plasmadüse und der Scheibenoberfläche gebildet wird. Dieses Vorgehen stellt sicher, dass bei beiden Düsen im Verhältnis zu beiden Oberflächen einer Glasscheibe ein minimaler Abstand nie unterschritten und ein maximaler Abstand nie überschritten wird. Dies gewährleistet, dass der Plasmastrahl nicht erlischt und gleichzeitig der Entschichtungsvorgang immer in optimaler Qualität und Vollständigkeit abläuft. Die neutrale Position der Glasscheibe ist dabei die Position, in welcher sich die Glasscheibe genau in der Mitte zwischen den beiden Düsen befindet. In dieser Position ist auf beiden Seiten der Glasscheibe der Abstand zwischen der jeweiligen Scheibenoberfläche und der Düse gleich gross. Der freie Zwischenraum zwischen den beiden Düsen eines Paares wird dann durch die Summe aus der Dicke der Glasscheibe, plus dem maximalen Abstand und plus dem minimalen Abstand bestimmt.

Bei der erfindungsgemässen Vorrichtung ist beidseits einer Stützebene für die Glasscheibe je eine Plasmadüse angeordnet, wobei die beiden Plasmadüsen ein Paar bilden und die Frontflächen dieser beiden Düsen gegeneinander gerichtet sind. An jeder Plasmadüse ist ein Abstandsensor angeordnet, welcher einen minimalen Abstand zwischen der Frontfläche der Plasmadüse und der Oberfläche der Glasscheibe bestimmt. Zwischen den beiden Frontflächen der Düsen eines Düsenpaares besteht ein freier Abstand, welcher mindestens der Summe aus der Dicke der Glasscheibe plus dem zweifachen minimalen Abstand der Frontfläche der Plasmadüse plus einem zulässigen Verschiebewert entspricht. Diese erfindungsgemässe Anordnung bringt den Vorteil, dass die beidseitige Bearbeitung einer Glasscheibe ermöglicht wird, ohne dass die Glasscheibe gewendet werden muss. Während des Bearbeitungsvorganges, bei welchem streifenweise ein Teil der Beschichtung an einer Oberfläche der Glasscheibe entfernt wird, kann wahlweise eine der beiden Düsen oder gleichzeitig beide Düsen in Betrieb gesetzt werden. Der Abstandsensor an jeder Düse stellt dabei sicher, dass ein minimaler Abstand zwischen den Frontflächen der Düsen und den Oberflächen der Glasscheibe nicht unterschritten wird und auch ein maximaler Abstand nicht überschritten wird. Dies ist notwendig, um die gewünschten und optimalen Funktionen des Plasmastrahls, welcher aus den Düsen austritt, zu gewährleisten. Da die beiden Düsen gegeneinander gerichtet sind, sind auch die beiden Abstandsensoren gegeneinander gerichtet und bilden beidseits der Glasscheibe eine Funktionseinheit. Der freie Abstand zwischen den Frontflächen der beiden Düsen eines Düsenpaares wird dabei so gewählt, dass er mindestens der Summe aus der Dicke der Glasscheibe plus dem zweifachen Minimalabstand plus einem vorher bestimmten zulässigen Verschiebewert entspricht. Der zulässige Verschiebewert ist dabei dasjenige Mass, um welches die Glasscheibe zwischen den beiden Düsen bewegt werden kann, ohne dass der minimale Abstand unterschritten oder der maximale Abstand überschritten wird. Dadurch wird gewährleistet, dass der aus den Düsen austretende Plasmastrahl weder gelöscht wird noch zu stark gestreut werden kann. Der zulässige Verschiebewert entspricht damit auch dem Toleranzbereich, in welchem der Plasmastrahl seine optimale Wirkung entfaltet. Wenn sich die Glasscheibe in einer neutralen Position, d. h. genau in der Mitte zwischen den beiden Düsen befindet, entspricht der Abstand zwischen der Frontfläche jeder Düse und der Oberfläche der Glasscheibe der Summe aus dem minimalen Abstand und der Hälfte des zulässigen Verschiebewertes.

Erfindungsgemäss wird weiter vorgeschlagen, dass der Abstandsensor ein mechanischer Abstandhalter ist, welcher sich von der Frontfläche der Plasmadüse in Richtung der Oberfläche der Glasscheibe erstreckt. In einer neutralen Position der Glasscheibe zwischen den beiden Düsen weist das gegen die Oberfläche der Glasscheibe gerichtete vordere Ende des Abstandhalters zur Oberfläche der Glasscheibe einen freien Abstand auf. Dieser freie Abstand entspricht dabei der Hälfte des zulässigen Verschiebewertes der Glasscheibe. Folglich entspricht die Länge des mechanischen Abstandhalters mindestens dem minimal zulässigen Abstand zwischen der Frontfläche der Plasmadüse und der Scheibenoberfläche. Die Länge des mechanischen Abstandhalters kann aber auch grösser sein, wenn sich dies zur Wahrung der Qualität der Bearbeitung als zweckmässig erweisen sollte.

In zweckmässiger Ausgestaltung der Erfindung ist der zulässige Verschiebewert durch die Differenz aus dem maximal zulässigen Arbeitsabstand zwischen der Frontfläche der Plasmadüse und der Scheibenoberfläche und dem minimal zulässigen Arbeitsabstand zwischen der Frontfläche der Plasmadüse und der Scheibenoberfläche bestimmt. Dieser Verschiebewert, um welchen sich die Glasscheibe zwischen den Düsen in zulässiger Weise verschieben darf, stellt sicher, dass die Düsen eines Düsenpaares nicht bei der kleinsten Veränderung verschoben werden, sondern nur dann, wenn die Abweichungen die Qualität und die Funktionsweise der Bearbeitung stören würden.

Erfindungsgemäss wird weiter vorgeschlagen, dass die Plasmadüse einen Rotationskopf aufweist und der Plasmastrahl an der Frontfläche des Rotationskopfes exzentrisch zur Rotationsachse austritt und um diese Achse rotiert. Derartige Plasmadüsen sind an sich bekannt. In Verbindung mit den erfindungsgemässen Lösungen bringen sie den Vorteil, dass der Abstandhalter etwa im Zentrum der Frontfläche der Plasmadüse und im Bereiche der Rotationsachse angeordnet werden kann. Dies führt zu erheblichen konstruktiven Vorteilen und ermöglicht die Anordnung von Abstandhaltern in unterschiedlichen Ausgestaltungsformen. Als besonders vorteilhaft erweist sich eine Lösung, bei welcher der Abstandhalter aus einem duroplastischen Kunststoffelement mit einer Gleitfläche am vorderen Ende besteht. Geeignete Materialien für ein derartiges Kunststoffelement sind Materialien aus der Gruppe der Phenoplaste, z.B. ein Stab aus einem Phenolharz-Hartpapier. Ein derartiger Abstandhalter verhindert Beschädigungen der Glasoberfläche bei einem Kontakt mit dem Abstandhalter. Es ist deshalb möglich, die Düsen eines Düsenpaares so zu lagern, dass sie bei einem Kontakt des Abstandhalters mit der Scheibenoberfläche durch den Abstandhalter etwa rechtwinklig zur Scheibenoberfläche verschoben werden. Diese Lösung ist sehr einfach und führt trotzdem zu einer sehr hohen Betriebssicherheit.

Eine weitere Ausbildung der Erfindung sieht vor, dass der Abstandsensor ein berührungsloser Sensor ist, wobei dieser berührungslose Sensor mit einem Steuergerät verbunden ist. Das Steuergerät wirkt mit einer Verstelleinrichtung zusammen, welche auf das Plasmadüsenpaar einwirkt. Bei dieser Ausführungsform werden an sich bekannte berührungslose Sensoren eingesetzt, z.B. ein optischer Sensor. Dabei weist die Anordnung auch bei Verwendung eines berührungslosen Sensors den gleichen freien Abstand zwischen den Düsen eines Düsenpaares und den gleichen zulässigen Verschiebewert auf, wie er oben bereits beschrieben wurde. Der Sensor stellt dabei allfällige Veränderungen der Positionen der Glasoberflächen einer Glasscheibe fest und gibt entsprechende Mess- und Steuersignale an das nachgeschaltete Steuergerät und die Verstelleinrichtung für die Düsen ab. Diese bewirken, dass der minimale Abstand nicht unterschritten und der maximale Abstand zwischen den Frontflächen der Plasmadüsen und den Scheibenoberflächen nicht überschritten wird.

Im Folgenden wird die Erfindung anhand von Ausführungsbeispielen unter Bezugnahme auf die beiliegenden Zeichnungen erläutert. Es zeigen:
Fig. 1 eine Bearbeitungseinrichtung zum Entschichten von Oberflächen,
Fig. 2 einen Ausschnitt aus dem Kantenbereich einer Glasscheibe und einem Paar von Plasmadüsen, und
Fig. 3 ein Paar von Plasmadüsen in einem Teilschnitt.

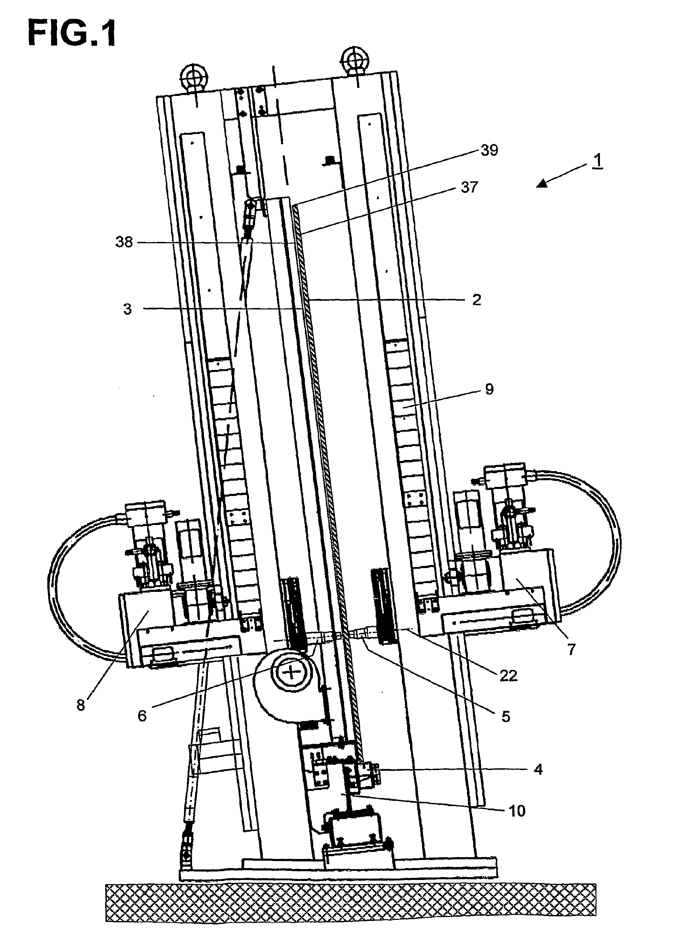

Fig. 1 zeigt eine Entschichtungseinrichtung 1, welche Teil einer Verbundglas-Fertigungslinie ist. Derartige Verbundglas-Fertigungslinien sind als horizontale Fertigungsstrassen aufgebaut und können beispielsweise eine Einrichtung zum Vorbehandeln von Glasscheiben 2, die gezeigte Entschichtungseinrichtung 1, eine Einrichtung zum Aufbringen von Abstandhaltern sowie eine Montageeinrichtung zum Zusammenfügen mehrerer Glasscheiben zu einer Verbundglas-Einheit umfassen. Die Entschichtungseinrichtung 1 umfasst dabei eine Stützebene 3, auf welcher in bekannter Weise eine Glasscheibe 2 aufliegt und gehalten ist. Am unteren Bereich der Stützebene 3 ist ein Auflage- und Transportband 4 angeordnet, auf welchem die Glasscheibe 2 aufliegt. Mittels dieses Transportbandes 4 und eines Transportantriebes 10 wird die Glasscheibe 2 in horizontaler Richtung durch die Entschichtungseinrichtung 1 gefördert. Auf einer Achse 22, welche etwa rechtwinklig zur Glasscheibe 2 verläuft, ist ein Paar von Plasmadüsen 5, 6 angeordnet. Diese Plasmadüsen 5, 6 sind Teile von je einer Einheit 7 bzw. 8, welche mit den notwendigen Mitteln zur Erzeugung eines Plasmas ausgestattet sind. Die Beschichtungseinrichtung 1 weist im Weiteren eine Trägereinrichtung 9 auf, welche etwa in der vertikalen Richtung der Maschine 1 und parallel zur Stützebene 3 verläuft. Die Plasmaeinheiten 7, 8 sind entlang dieser Trägereinrichtung 9 verfahrbar und damit auch die beiden Plasmadüsen 5, 6. Die beiden Plasmadüsen 5, 6 des Düsenpaars sind gegeneinander gerichtet und weisen einen freien Zwischenraum auf, durch welchen die Glasscheibe 2 geführt wird. Ein Plasmastrahl, welcher aus der Plasmadüse 5 austritt, ist gegen eine vordere Oberfläche 37 der Glasscheibe 2 gerichtet. Ein Plasmastrahl, welcher aus der Plasmadüse 6 austritt, ist gegen eine hintere Oberfläche 38 der Glasscheibe 2 gerichtet. Dadurch ist es möglich, entweder nur die Oberfläche 37 der Glasscheibe 2, oder nur die Oberfläche 38, oder beide Oberflächen 37 und 38 gleichzeitig mit einem Plasmastrahl zu beaufschlagen und zu bearbeiten. In horizontaler Richtung erfolgt die Bearbeitung, indem die Glasscheibe 2 mittels des Transportbandes 4 in horizontale Richtung durch die Entschichtungseinrichtung 1 an den Plasmadüsen 5, 6 vorbei verfahren wird. In vertikaler Richtung erfolgt die Bearbeitung, indem die Plasmadüsen 5, 6 mit Hilfe der Plasmaeinheiten 7, 8 und der vertikalen Trägereinrichtung 9 etwa in vertikaler Richtung bewegt, bzw. verfahren werden und dabei die Bearbeitung einer oder beider Oberflächen 37, 38 der Glasscheibe 2 durch die Plasmastrahlen erfolgt. Im vorliegenden Beispiel ist die dargestellte Entschichtungseinrichtung 1 speziell dazu ausgebildet, die Kantenbereiche 39 von Glasscheiben 2 zu bearbeiten, welche an den Breitseiten-Oberflächen 37, 38 ein- oder zweiseitig beschichtet sind. Dabei kann es sich um Beschichtungen handeln, wie sie in bekannter Weise bei Glasscheiben für Isolier-Verbundgläser oder bei Glasscheiben für Brandschutz-Verbundgläser Verwendung finden. Mit der erfindungsgemässen Einrichtung können derartige Beschichtungen streifenweise entfernt werden, insbesondere entlang der Kantenbereiche 39. Bei entsprechender Steuerung der vertikalen und horizontalen Antriebe können aber auch beliebige Linien auf den Oberflächen 37, 38 der Glasscheibe 2 abgefahren und streifenweise entschichtet werden. Bei konfektionierten, d.h. bereits auf Mass zugeschnittenen Glasscheiben 2 dient die Einrichtung insbesondere dazu, die Kantenbereiche 39 zu entschichten. Dadurch können Abstandhalter-Profile aus Kunststoff oder Metall auf die Glasscheibe 2 aufgeklebt werden oder ein Strang aus Abstandhaltermaterial kann auf die Kantenbereiche extrudiert werden. Bei Glasscheiben 2, welche noch unterteilt werden müssen, können die entsprechenden Bereiche, entlang welcher die die Scheibe gebrochen wird, mit der erfindungsgemässen Einrichtung streifenweise entschichtet werden. Der Plasmastrahl ermöglicht dabei eine sehr hohe Qualität bei der Entfernung der Beschichtungen und auch eine hohe Arbeitsgeschwindigkeit. Gleichzeitig verbessert das ionisierte Gas des Plasmastrahls in bekannter Weise die Haftung für die Klebstoffe an den Oberflächen der Glasscheibe 2, indem es die Glasoberflächen aktiviert.

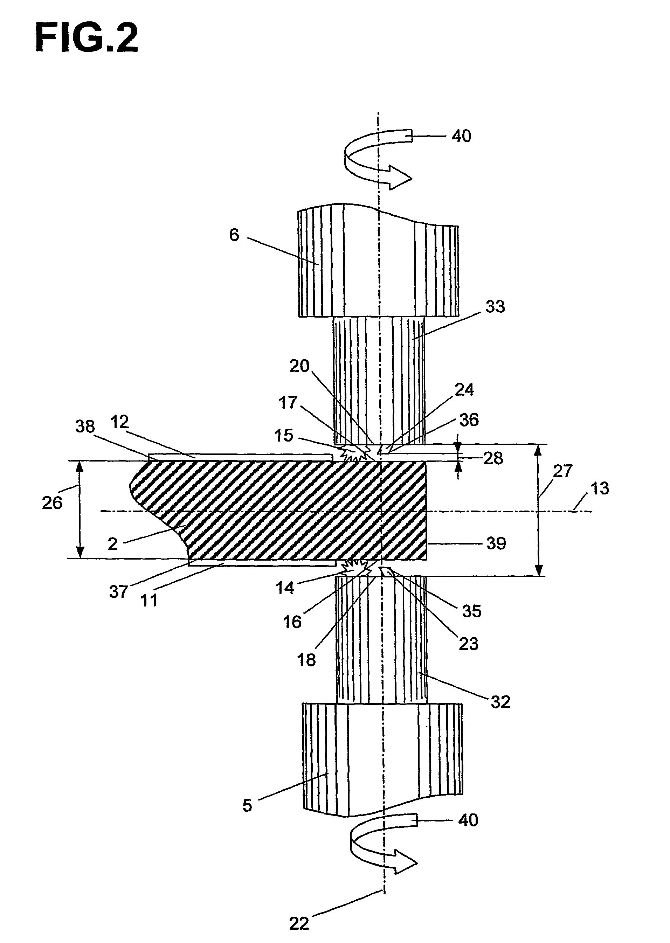

Fig. 2 zeigt einen Teilausschnitt eines vertikalen Kantenbereiches 39 einer Glasscheibe 2, welche an beiden Oberflächen 37, 38 mit einer Beschichtung 11, 12 versehen ist. Im dargestellten Beispiel handelt es sich um eine Glasscheibe 2, welche für den Einsatz in einem Brandschutz-Verbundglas bestimmt ist. Dieses Verbundglas besteht aus drei Glasscheiben, wobei die Glasscheibe 2 in der Mitte angeordnet ist. Beim fertigen Verbundglas ist zwischen dieser mittleren Glasscheibe 2 und den beiden äusseren Glasscheiben je eine Schicht einer an sich bekannten Brandschutzmasse angeordnet. Bei den beiden Beschichtungen 11, 12 handelt es sich um einen so genannten Primer, im dargestellten Beispiel um eine anorganische Schicht. Am Kantenbereich 39 der Glasscheibe 2 muss die Beschichtung 11, 12 entlang von streifenförmigen Randbereichen 16, 17 der Oberflächen 37, 38 entfernt werden. Dazu sind auf einer Achse 22, welche etwa rechtwinklig zur Glasscheibe 2 verläuft, ein Paar von Plasmadüsen 5, 6 angeordnet. Diese beiden Plasmadüsen 5, 6 sind, wie zu Fig. 1 beschrieben, Teile von Plasmaeinheiten 7, 8. Die beiden Plasmadüsen 5 und 6 sind gegeneinander gerichtet. Die Frontflächen 18, 20 der beiden Plasmadüsen 5, 6 sind in Richtung der Achse 22 mit einem Abstand 27 zueinander positioniert. Der Abstand 27 definiert einen freien Zwischenraum zwischen den beiden Düsen 5, 6, in welchem sich die Glasscheibe 2 befindet. Wenn sich die Glasscheibe 2 genau in der Mitte zwischen den beiden Frontflächen 18, 20 befindet, so wird dies als neutrale Position bezeichnet, welche durch die Achse 13 definiert ist. Aus den beiden Frontflächen 18 bzw. 20 der beiden Plasmadüsen 5 bzw. 6 treten die Plasmastrahlen 14 bzw. 15 aus. Im dargestellten Beispiel sind zwei Plasmastrahlen 14, 15 vorhanden, mit welchen die Glasscheibe 2 gleichzeitig beidseitig entschichtet wird. Die beiden Plasmadüsen 5, 6 weisen Düsenköpfe 32, 33 auf, welche um die Achse 22 in Richtung der Pfeile 40 rotieren. Diese Düsenkonstruktion ermöglicht die Anwendung eines konzentrierten, genau definierten Plasmastrahls 14, 15. Da diese Plasmastrahlen 14, 15 exzentrisch zur Rotationsachse 22 aus den Düsenköpfen 32, 33 austreten, kann mit Hilfe der Rotationsbewegung der Düsenköpfe 32, 33 trotzdem ein relativ breiter Bereich der Oberflächen der Glasscheibe 2 beaufschlagt werden. Dabei kann die Breite der Randbereiche 16, 17 an den Oberflächen 37, 38, welche entschichtet werden sollen, verändert werden, indem die Montageachse bzw. Rotationsachse 22 der beiden Düsen 5, 6 mit Bezug auf die Kante 39 der Glasscheibe 2 verschoben wird.

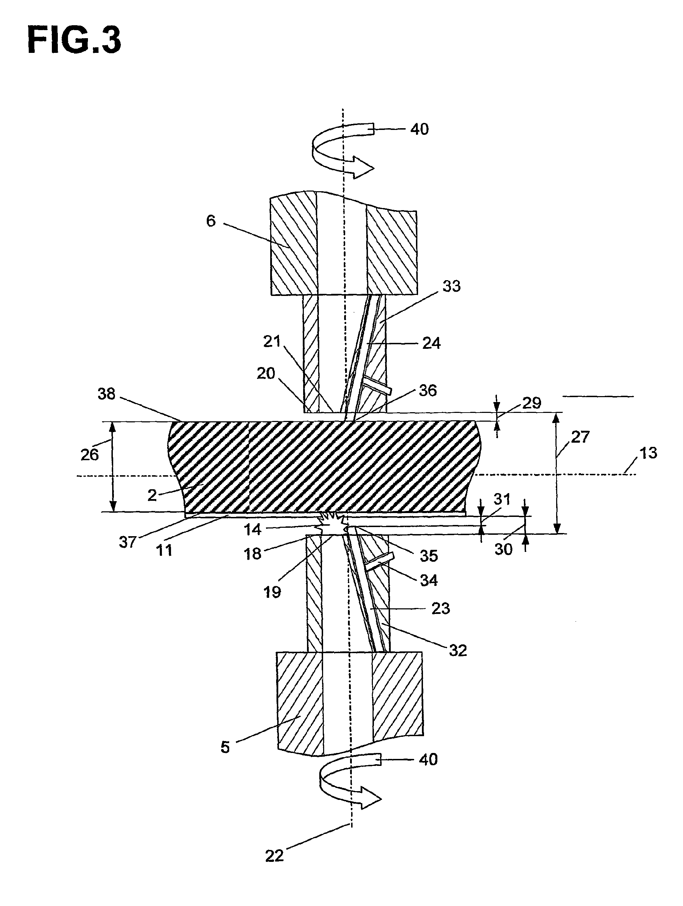

An den Frontflächen 18 bzw. 20 der beiden Plasmadüsen 5, 6 sind Abstandsensoren in der Form von mechanischen Abstandhaltern 23 bzw. 24 angeordnet. Diese Abstandhalter 23, 24 weisen an ihren gegen die Oberflächen 37, 38 der Glasscheibe 2 gerichteten Enden Gleitflächen 35 und 36 auf. In der neutralen Position der Glasscheibe 2 auf der Achse 13 weisen diese Gleitflächen 35, 36 der Abstandsensoren 23 und 24 zu den Oberflächen 37, 38 der Glasscheibe 2 je einen Abstand 28 auf. Wenn sich die Glasscheibe 2 aus der neutralen Position wegbewegt, kann sie sich sowohl nach vorn wie auch nach hinten um einen vorbestimmten Verschiebewert verschieben. Dabei entspricht dieser vorbestimmte Verschiebewert 31 (siehe Fig. 3) gesamthaft dem zweifachen Wert des Abstandes 28. Dieser vorbestimmte Verschiebewert 31 entspricht dem Toleranzbereich, in welchem die Plasmastrahlen die gewünschte Bearbeitungsqualität aufweisen und nicht gelöscht werden können. Sobald eine der Oberflächen 37, 38 der Glasscheibe 2 eine Gleitfläche 35 der beiden Abstandsensoren 23, 24 berührt und sich noch weiter in dieser Richtung bewegt, werden die beiden Plasmadüsen 5, 6 gemeinsam als Paar in die Richtung der Abweichung gegenüber der Achse 13 verschoben. Um dies zu ermöglichen, sind die beiden Plasmadüsen 5, 6 entsprechend gelagert, so dass sie sich frei bewegen können und/oder mit entsprechenden Regelantrieben den Bewegungen der Oberflächen 37, 38 der Glasscheibe 2 nachgeführt werden. Die in Fig. 2 dargestellten mechanischen Abstandhalter 23, 24 stellen eine besonders einfache Lösung dar, da keine empfindlichen optischen oder elektronischen Sensoren notwendig sind. Auch wenn nur eine der beiden Plasmadüsen 5 bzw. 6 in Betrieb ist und somit nur eine der beiden Oberflächen 37, 38 der Glasscheibe 2 bearbeitet und entschichtet wird, wird der Abstand der aktiven Plasmadüse 5 bzw. 6 zur Glasoberfläche 37 bzw. 38 gemeinsam mit der gegenüberliegenden Düse bzw. deren Abstandhalter kontrolliert. Dies wird dadurch gewährleistet, dass vor dem Beginn der Bearbeitung einer Glasscheibe 2 in der Bearbeitungseinrichtung 1 der Abstand 27 zwischen den Frontflächen 18 und 20 der beiden Plasmadüsen 5, 6 auf das richtige Mass eingestellt wird. Dieser Abstand 27 wird wie aus Fig. 3 ersichtlich ist, dadurch ermittelt, dass die Summe aus der Dicke 26 der Glasscheibe 2, plus den zweifachen minimalen Abstand 29 der Frontfläche der Plasmadüse von der Glasoberfläche und plus den zulässigen Verschiebewert 31 gebildet wird. Der zulässige Verschiebewert 31 (siehe Fig. 3) wird dadurch vorbestimmt, dass die Differenz zwischen einem maximal zulässigen Arbeitsabstand 30, zwischen den Frontflächen 18 bzw. 20 der Plasmadüsen 5 bzw. 6 und den Scheibenoberflächen 37 bzw. 38, sowie einem minimal zulässigen Arbeitsabstand 29, zwischen den Frontflächen 18 bzw. 20 der Plasmadüsen 5 bzw. 6 und den Scheibenoberflächen 37 bzw. 38, gebildet wird. Der maximal zulässige Arbeitsabstand 30 ist dabei die maximale Länge des Plasmastrahls 14 bzw. 15, bei welcher dieser Plasmastrahl 14 bzw. 15 noch optimal arbeitet und gebündelt ist. Der minimal zulässige Arbeitsabstand 29 ist dabei die minimale Länge des Plasmastrahls 14 bzw. 15, bei welcher dieser Plasmastrahl 14 bzw. 15 noch brennt und nicht gelöscht wird.

Fig. 3 zeigt ebenfalls einen Teilausschnitt aus einem Kantenbereich 39 einer Glasscheibe 2, jedoch eines horizontalen Kantenbereiches 39. Dabei sind die Teilbereiche der Plasmadüsen 5, 6, welche sichtbar sind, geschnitten dargestellt. Die in Fig. 3 dargestellte Glasscheibe 2 ist nur einseitig mit einer Beschichtung 11 beschichtet und zwar an der Oberfläche 37. Deshalb ist auch nur die Plasmadüse 5 in Betrieb und erzeugt einen Plasmastrahl 14 zur Bearbeitung bzw. Entschichtung eines Teilbereiches der Oberfläche 37 der Glasscheibe 2. Wenn eine Glasscheibe 2 an der gegenüberliegenden Oberfläche 38 beschichtet wäre, würde wahlweise die Plasmadüse 6 in Betrieb gesetzt und die Oberfläche 38 in einem Teilbereich mit einem entsprechenden, in Fig. 2 dargestellten Plasmastrahl 15 beaufschlagt. In dieser Darstellung ist ersichtlich, dass die Austrittsöffnungen 19, 21 für die Plasmastrahlen 14, 15 exzentrisch zur Rotationsachse 22 angeordnet sind. Da die Düsenköpfe 32, 33 der beiden Plasmadüsen 5, 6 um die Rotationsachse 22 in Richtung der Pfeile 40 rotieren, wird trotzdem ein relativ breiter Streifen an den Oberflächen 37, 38 der Glasscheibe 2 beaufschlagt. In den Rotationsköpfen 32, 33 der beiden Plasmadüsen 5, 6 sind die mechanischen Abstandhalter 23, 24 eingebaut. Diese Abstandhalters 23, 24 bestehen im dargestellten Beispiel aus einem runden Stab aus Phenolharz-Hartpapier. Sie können aber auch aus einem anderen geeigneten Material, insbesondere aus der Gruppe der Phenoplaste hergestellt sein. Die Abstandhalter 23, 24 werden mit Hilfe von Befestigungselementen 34 positioniert und in den Düsenköpfen 32, 33 gehalten. Die vorderen Enden 35 bzw. 36 der beiden Abstandhalter 23 bzw. 24 stehen über die Frontflächen 18 bzw. 20 der beiden Plasmadüsen 5, 6 vor. Der Abstand zwischen den vorderen Enden 35, 36 der Abstandhalter 23, 24 zu den Frontflächen 18, 20 der beiden Düsen 5, 6 ist dabei mindestens so gross wie der minimale notwendige Arbeitsabstand 29, welcher für die richtige Funktion der Plasmastrahlen 14, 15 notwendig ist. In Fig. 3 ist die Glasscheibe 2 in einer Position dargestellt, in welcher sie aus der neutralen Position gemäss der Achse 13 ausgelenkt ist. Die Oberfläche 38 liegt dabei am vorderen Ende bzw. der entsprechenden Gleitfläche 36 am Abstandhalter 24 an. Die gegenüberliegende Oberfläche 37 der Glasscheibe 2 weist in dieser Position zur Frontfläche 18 der Plasmadüse 5 den maximal zulässigen Arbeitsabstand 30 auf. Zwischen der Oberfläche 37 der Glasscheibe 2 und dem vorderen Ende 35 des Abstandhalters 23 an der Plasmadüse 5 ist der vorbestimmte zulässige Verschiebewert 31 ausgebildet. Wenn sich die Glasscheibe 2 weiter in Richtung der Plasmadüse 6 bewegt, so wird auch die Plasmadüse 6 in diese Richtung verschoben und damit auch die gegenüberliegende Plasmadüse 5. Diese gemeinsame Bewegung ist zwingend vorgegeben, da die beiden Plasmadüsen 5, 6 ein Paar bilden und gemeinsam gesteuert und verschoben werden. Bewegt sich jedoch die Glasscheibe 2 in Richtung der Plasmadüse 5, so bleibt das Paar von Plasmadüsen 5,6 in der dargestellten Position stehen, bis die Oberfläche 37 der Glasscheibe 2 mit dem vorderen Ende 35 des Abstandhalters 23 in Kontakt tritt. Bei einer weiteren Verschiebung der Glasscheibe 2 in diese Richtung wird das Düsenpaar 5, 6 wiederum gemeinsam in diese Gegenrichtung verschoben. Durch dieses erfindungsgemässe Betriebsverfahren und die entsprechende Vorrichtung können Veränderungen der Positionen der Oberflächen 37 bzw. 38 der Glasscheibe 2 und auch Positionsveränderungen der Glasscheibe 2 selbst ausgeglichen werden, wobei gleichzeitig immer gewährleistet ist, dass der minimale Arbeitsabstand für die Plasmastrahlen 14, 15 nicht unterschritten und der maximale Arbeitsabstand für die Plasmastrahlen 14, 15 nicht überschritten wird. Zudem ist es, wie bereits beschrieben, möglich, wahlweise Teilbereiche der Oberfläche 37 der Glasscheibe 2 oder der Oberfläche 38 der Glasscheibe 2 oder gleichzeitig beide Oberflächen 37 und 38 der Glasscheibe 2 zu bearbeiten.

## Patentansprüche

1. Verfahren zum streifen- und flächenförmigen Bearbeiten, insbesondere zum teilweisen Entfernen von organischen und anorganischen Beschichtungen an Oberflächen von Glasscheiben (2), wobei eine Glasscheibe (2) mit einer mindestens einseitigen Oberflächenbeschichtung (11, 12) in eine Bearbeitungs- und Verschiebeeinrichtung (1) eingelegt wird, mit einer Plasmadüse (5, 6) ein Plasmastrahl (14, 15) erzeugt und die Plasmadüse (5, 6) über die Oberfläche der Glasscheibe (2) bewegt wird, dieser Plasmastrahl (14, 15) gegen den Oberflächenbereich der Glasscheibe (2) mit der zu entfernenden Beschichtung gerichtet und die Beschichtung (11, 12) durch den Plasmastrahl (14, 15) mindestens teilweise entfernt wird, **dadurch gekennzeichnet, dass** im Bereich der Oberfläche, welche entschichtet werden soll, mindestens ein Paar von Plasmadüsen (5, 6) angeordnet wird, wobei die Austrittsöffnungen (19, 21) für den Plasmastrahl (14, 15) gegeneinander und gleichzeitig je gegen eine von sich gegenüberliegenden Breitseiten-Oberflächen (37, 38) der Glasscheibe (2) gerichtet werden, die beiden Düsen (5, 6) eines Paares von Plasmadüsen gemeinsam gesteuert und betrieben werden, wahlweise aus einer der beiden Düsen (5, 6) des Düsenpaares ein Bereich, oder aus beiden Düsen (5, 6) gleichzeitig zwei Bereiche, der Oberflächen (37, 38) mit einem Plasmastrahl (14, 15) beaufschlagt wird und dabei in dem vom Plasmastrahl (14, 15) beaufschlagten Bereich der Oberflächen (37, 38) die Beschichtung (11, 12) entfernt und gleichzeitig die Glasoberfläche aktiviert wird.

2. Verfahren nach Patentanspruch 1, **dadurch gekennzeichnet, dass** die beiden Plasmadüsen (5, 6) eines Paares auf eine gemeinsame Achse (22) ausgerichtet und auf dieser gemeinsamen Achse (22) mit einem vorgegebenen Abstand (27) zueinander angeordnet werden.

3. Verfahren nach Patentanspruch 1 oder 2, **dadurch gekennzeichnet, dass** während der Verschiebung der Glasscheibe (2) und/oder Bewegung des Düsenpaares (5, 6) Veränderungen der Position der Breitseiten-Oberflächen (37, 38) der Glasscheibe (2), im Bereiche zwischen den Plasmadüsen (5, 6), mittels Abstandsensoren (23, 24) festgestellt werden und das Paar von Plasmadüsen (5, 6) jeweils etwa rechtwinklig zur Glasscheibe (2) in Richtung der Positionsveränderung der Glasscheibenoberflächen (37, 38) verschoben wird.

4. Verfahren nach Patentanspruch 3, **dadurch gekennzeichnet, dass** die Verschiebung des Paares von Plasmadüsen (5, 6) nur erfolgt, wenn die Veränderung der Position der Breitseiten-Oberflächen (37, 38) der Glasscheibe (2) einen vorbestimmten zulässigen Verschiebewert (31) überschreitet.

5. Verfahren nach Patentanspruch 4, **dadurch gekennzeichnet, dass** der vorbestimmte, zulässige Verschiebewert (31) der Position der Glasscheibe (2), aus der Differenz zwischen einem maximal zulässigen Arbeitsabstand (30) zwischen der Frontfläche (18, 20) der Plasmadüse (5, 6) und der Scheibenoberfläche (37, 38) und einem minimal zulässigen Arbeitsabstand (29) zwischen der Frontfläche (18, 20) der Plasmadüse (5, 6) und der Scheibenoberfläche (37, 38) ermittelt wird.

6. Vorrichtung zur Durchführung des Verfahrens nach Patentanspruch 1, zum streifen- und flächenförmigen Bearbeiten insbesondere zum teilweisen Entfernen von organischen und anorganischen Beschichtungen (11, 12) an Oberflächen (37, 38) von Glasscheiben (2), mit einer Bearbeitungs- und Verschiebeeinrichtung (1) mit einer Stützebene (3) für eine Breitseite der Glasscheibe (2) und einer Bewegungs- und Trägereinrichtung (7, 8, 9) für mindestens eine Plasmadüse (5, 6) zur Erzeugung eines Plasmastrahls (14, 15), wobei die Plasmadüse (5, 6) eine gegen eine Breitseiten-Oberfläche (37, 38) der Glasscheibe (2) gerichtete Frontfläche (18, 20) mit einer Austrittsöffnung (19, 21) für den Plasmastrahl (14, 15) aufweist, **dadurch gekennzeichnet, dass** beidseits der Stützebene (3) für die Glasscheibe (2) je eine Plasmadüse (5, 6) angeordnet ist, wobei die beiden Plasmadüsen (5, 6) ein Paar bilden und die Frontflächen (18, 20) dieser beiden Düsen (5, 6) gegeneinander gerichtet sind, an jeder Plasmadüse (5, 6) ein Abstandsensor (23, 24) angeordnet ist, welcher einen Minimalabstand (29) zwischen der Frontfläche (18, 20) der Plasmadüse (5, 6) und der Oberfläche (37, 38) der Glasscheibe (2) bestimmt und zwischen den beiden Frontflächen (18, 20) der Düsen (5, 6) eines Düsenpaares ein freier Abstand (27) besteht, welcher mindestens der Summe aus der Dicke (26) der Glasscheibe (2) plus dem zweifachen Minimalabstand (29) der Frontfläche (18, 20) der Plasmadüse (5, 6) plus einem zulässigen Verschiebewert (31) entspricht.

7. Vorrichtung nach Patentanspruch 6, **dadurch gekennzeichnet, dass** der Abstandsensor (23, 24) ein mechanischer Abstandhalter ist, welcher sich von der Frontfläche (18, 20) der Plasmadüse (5, 6) in Richtung der Oberfläche (37, 38) der Glasscheibe (2) erstreckt und das gegen die Oberfläche (37, 38) der Glasscheibe (2) gerichtete vordere Ende (35, 36) des Abstandhalters (23, 24) in einer neutralen Position der Glasscheibe (2), zur Oberfläche (37, 38) der Glasscheibe (2) einen freien Abstand (28) aufweist, wobei dieser Abstand (28) der Hälfte des zulässigen Verschiebewertes (31) entspricht.

8. Vorrichtung nach einem der Patentansprüche 6 oder 7, **dadurch gekennzeichnet, dass** der zulässige Verschiebewert (31) durch die Differenz aus dem maximal zulässigen Arbeitsabstand (30) zwischen der Frontfläche (18, 20) der Plasmadüse (5, 6) und der Scheibenoberfläche (37, 38) und dem minimal zulässigen Arbeitsabstand (29) zwischen der Frontfläche (18, 20) der Plasmadüse (5, 6) und der Scheibenoberfläche (37, 38) bestimmt ist.

9. Vorrichtung nach einem der Patentansprüche 6 bis 8, **dadurch gekennzeichnet, dass** die Plasmadüse (5, 6) einen Rotationskopf (32, 33) aufweist und der Plasmastrahl (14, 15) an der Frontfläche (18, 20) des Rotationskopfes (32, 33) exzentrisch zur Rotationsachse (22) austritt.

10. Vorrichtung nach Patentanspruch 9, **dadurch gekennzeichnet, dass** der Abstandsensor bzw. Abstandhalter (23, 24) etwa im Zentrum der Frontfläche (18, 20) der Plasmadüse (5, 6) und im Bereiche der Rotationsachse (22) angeordnet ist.

11. Vorrichtung nach Patentanspruch 7, **dadurch gekennzeichnet, dass** die Länge des Abstandhalters (23, 24) zwischen dem vorderen Ende (35, 36) und der Frontfläche (18, 20) der Plasmadüse (5, 6) mindestens so gross ist, wie ein minimal notwendiger Arbeitsabstand (29) für den Plasmastrahl (14, 15) zwischen der Austrittsöffnung (19, 21) und der Oberfläche (37, 38) der Glasscheibe (2).

12. Vorrichtung nach einem der Patentansprüche 7 oder 11, **dadurch gekennzeichnet, dass** der Abstandsensor bzw. Abstandhalter (23, 24) aus einem duroplastischen Kunststoffelement mit einer Gleitfläche am vorderen Ende (35, 36) besteht.

13. Vorrichtung nach Patentanspruch 12, **dadurch gekennzeichnet, dass** der Abstandhalter (23, 24) mit einem Material aus der Gruppe der Phenoplaste gebildet ist.

14. Vorrichtung nach Patentanspruch 6, **dadurch gekennzeichnet, dass** der Abstandsensor (23, 24) ein berührungsloser Sensor ist, dieser berührungslose Sensor mit einem Steuergerät verbunden ist und das Steuergerät mit einer Verstelleinrichtung (7, 8), welche auf das Plasmadüsenpaar einwirkt, verbunden ist.

## Claims

1. Method for processing in the form of strips and areas, in particular for partially removing organic and inorganic coatings from surfaces of glass panes (2), a glass pane (2) with an at least one-sided surface coating (11, 12) being placed into a processing and displacement instrument (1), a plasma jet (14, 15) being generated by a plasma nozzle (5, 6) and the plasma nozzle (5, 6) being moved over the surface of the glass pane (2), this plasma jet (14, 15) being directed towards the surface region of the glass pane (2) with the coating to be removed, and the coating (11, 12) being at least partially removed by the plasma jet (14, 15), **characterised in that** at least one pair of plasma nozzles (5, 6) is arranged in the region of the surface which is intended to be stripped, the outlet openings (19, 21) for the plasma jet (14, 15) being directed towards one another and at the same time respectively towards one of surfaces (37, 38) on mutually opposite wide sides of the glass pane (2), the two nozzles (5, 6) of a pair of plasma nozzles are controlled and operated together, one region of the surface (37, 38) is selectively exposed to a plasma jet (14, 15) from one of the two nozzles (5, 6) of the nozzle pair, or two regions are exposed simultaneously to a plasma jet (14, 15) from the two nozzles (5, 6), and the coating (11, 12) is thereby removed from the region of the surfaces (37, 38) which is exposed to the plasma jet (14, 15) while the glass surface is simultaneously activated.

2. Method according to Patent Claim 1, **characterised in that** the two plasma nozzles (5, 6) of a pair are aligned on a common axis (22) and are arranged at a predetermined distance (27) from one another on this common axis (22).

3. Method according to Patent Claim 1 or 2, **characterised in that** changes in the position of the surfaces (37, 38) on the wide sides of the glass pane (2), in the region between the plasma nozzles (5, 6), are established by means of distance sensors (23, 24) during the displacement of the glass pane (2) and/or movement of the nozzle pair (5, 6), and the pair of plasma nozzles (5, 6) is respectively displaced approximately perpendicularly to the glass pane (2) in the direction of the position change of the glass pane surfaces (37, 38).

4. Method according to Patent Claim 3, **characterised in that** the displacement of the pair of plasma nozzles (5, 6) is carried out only when the change in the position of the surfaces (37, 38) on the wide sides of the glass pane (2) exceeds a predetermined permissible displacement value (31).

5. Method according to Patent Claim 4, **characterised in that** the predetermined permissible displacement value (31) of the position of the glass pane (2) is ascertained from the difference between a maximum permissible working distance (30), between the front face (18, 20) of the plasma nozzle (5, 6) and the surface (37, 38) of the pane, and a minimum permissible working distance (29) between the front face (18, 20) of the plasma nozzle (5, 6) and the surface (37, 38) of the pane.

6. Device for carrying out the method according to Patent Claim 1, for processing in the form of strips and areas, in particular for partially removing organic and inorganic coatings (11, 12) from surfaces (37, 38) of glass panes (2), having a processing and displacement instrument (1) with a support plane (3) for a wide side of the glass pane (2) and a movement and carrying instrument (7, 8, 9) for at least one plasma nozzle (5, 6) to generate a plasma jet (14, 15), the plasma nozzle (5, 6) having a front face (18, 20) with an outlet opening (19, 21) for the plasma jet (14, 15) directed towards a surface (37, 38) on a wide side of the glass pane (2), **characterised in that** a plasma nozzle (5, 6) is respectively arranged on each side of the support plane (3) for the glass pane (2), the two plasma nozzles (5, 6) forming a pair and the front faces (18, 20) of these two nozzles (5, 6) being directed towards one another, a distance sensor (23, 24) is arranged on each plasma nozzle (5, 6), which determines a minimum distance (29) between the front face (18, 20) of the plasma nozzle (5, 6) and the surface (37, 38) of the glass pane (2), and there is a free distance (27) between the two front faces (18, 20) of the nozzles (5, 6) of a nozzle pair, which corresponds at least to the sum of the thickness (26) of the glass pane (2) plus twice the minimum distance (29) from the front face (18, 20) of the plasma nozzle (5, 6) plus a permissible displacement value (31).

7. Device according to Patent Claim 6, **characterised in that** the distance sensor (23, 24) is a mechanical spacer, which extends from the front face (18, 20) of the plasma nozzle (5, 6) in the direction of the surface (37, 38) of the glass pane (2) and the front end (35, 36) of the spacer (23, 24), directed towards the surface (37, 38) of the glass pane (2), lies at a free distance (28) from the surface (37, 38) of the glass pane (2) when the glass pane (2) is in a neutral position, this distance (28) corresponding to half the permissible displacement value (31).

8. Device according to one of Patent Claims 6 and 7, **characterised in that** the permissible displacement value (31) is determined by the difference of the maximum permissible working distance (30), between the front face (18, 20) of the plasma nozzle (5) and the surface (37, 38) of the pane, and the minimum permissible working distance (29) between the front face (18, 20) of the plasma nozzle (5, 6) and the surface (37, 38) of the pane.

9. Device according to one of Patent Claims 6 to 8, **characterised in that** the plasma nozzle (5, 6) has a rotary head (32, 33) and the plasma jet (14, 15) emerges off-centre from the rotation axis (22) at the front face (18, 20) of the rotary head (32, 33).

10. Device according to Patent Claim 9, **characterised in that** the distance sensor or spacer (23, 24) is arranged approximately at the centre of the front face (18, 20) of the plasma nozzle (5, 6) and in the region of the rotation axis (22).

11. Device according to Patent Claim 7, **characterised in that** the length of the spacer (23, 24) between the front end (35, 36) and the front face (18, 20) of the plasma nozzle (5, 6) is at least as large as a minimum working distance (29) required for the plasma jet (14, 15) between the outlet opening (19, 21) and the surface (37, 38) of the glass pane (2).

12. Device according to one of Patent Claims 7 and 11, **characterised in that** the distance sensor or spacer (23, 24) consists of a thermosetting plastic element with a glide face at the front end (35, 36).

13. Device according to Patent Claim 12, **characterised in that** the spacer (23, 24) is formed by a material from the phenoplast group.

14. Device according to Patent Claim 6, **characterised in that** the distance sensor (23, 24) is a contactless sensor, this contactless sensor is connected to a control unit and the control unit is connected to an adjustment instrument (7, 8) which acts on the plasma nozzle pair.

## Revendications

1. Procédé pour usiner en bandes et de manière planiforme, en particulier pour enlever en partie des revêtements organiques et inorganiques sur des surfaces de plaques de verre (2), dans lequel une plaque de verre (2) avec un revêtement de surface (11, 12) au moins d'un côté est placée dans un dispositif d'usinage et de déplacement (1), un jet de plasma (14, 15) est produit avec une buse à plasma (5, 6) et la buse à plasma (5, 6) est mue au-dessus de la surface de la plaque de verre (2), ce jet de plasma (14, 15) est orienté vers la zone de surface de la plaque de verre (2) avec le revêtement à enlever et le revêtement (11, 12) est au moins en partie enlevé par le jet de plasma (14, 15), **caractérisé en ce que** au moins une paire de buses à plasma (5, 6) est disposée dans la zone de la surface dont le revêtement doit être enlevé, les orifices de sortie (19, 21) pour le jet de plasma (14, 15) étant orientés l'un vers l'autre et chacun étant orienté en même temps vers une surface du côté large (37, 38) de la plaque de verre (2) lui étant opposée, les deux buses (5, 6) d'une paire de buses à plasma étant commandées et actionnées conjointement, une zone étant soumise à l'action d'un jet de plasma (14, 15) sortant d'une des deux buses (5, 6) de la paire de buses ou deux zones des surfaces (37, 38) étant soumises en même temps à l'action d'un jet de plasma (14, 15) sortant des deux buses (5, 6) au choix et le revêtement (11, 12) étant enlevé ce faisant dans la zone des surfaces (37, 38) soumise à l'action du jet de plasma (14, 15) et la surface de verre étant en même temps activée.

2. Procédé selon la revendication 1, **caractérisé en ce que** les deux buses à plasma (5, 6) d'une paire sont alignées sur axe commun (22) et sont disposées à une distance prédéfinie (27) l'une de l'autre sur cet axe commun (22).

3. Procédé selon la revendication 1 ou 2, **caractérisé en ce que** pendant le déplacement de la plaque de verre (2) et / ou le mouvement de la paire de buses (5, 6), des modifications de la position des surfaces (37, 38) des larges côtés de la plaque de verre (2), dans la zone entre les buses à plasma (5, 6), sont déterminées au moyen de capteurs de distance (23, 24) et la paire de buses à plasma (5, 6) est déplacée chaque fois approximativement à angle droit par rapport à la plaque de verre (2) dans le sens de la modification de position des surfaces (37, 38) de plaque de verre.

4. Procédé selon la revendication 3, **caractérisé en ce que** le déplacement de la paire de buses à plasma (5, 6) n'a lieu que quand la modification de la position des surfaces (37, 38) des larges côtés de la plaque de verre (2) dépasse une valeur de déplacement (31) admissible prédéterminée.

5. Procédé selon la revendication 4, **caractérisé en ce que** la valeur de déplacement (31) admissible prédéterminée de la position de la plaque de verre (2) est établie à partir de la différence entre une distance de travail maximale admissible (30) entre la face frontale (18, 20) de la buse à plasma (5, 6) et la surface (37, 38) de la plaque et une distance de travail minimale admissible (29) entre la face frontale (18, 20) de la buse à plasma (5, 6) et la surface (37, 38) de la plaque.

6. Dispositif pour mettre en oeuvre le procédé selon la revendication 1, pour usiner en bandes et de manière planiforme, en particulier pour enlever en partie des revêtements organiques et inorganiques sur des surfaces (37, 38) de plaques de verre (2), avec un dispositif d'usinage et de déplacement (1) avec un plan d'appui (3) pour un large côté de la plaque de verre (2) et un dispositif de mouvement et de support (7, 8, 9) pour au moins une buse à plasma (5, 6) pour produire un jet de plasma (14, 15), la buse à plasma (5, 6) présentant une face frontale (18, 20) orientée vers une surface (37, 38) des larges côtés de la plaque de verre (2) et comprenant un orifice de sortie (19, 21) pour le jet de plasma (14, 15), **caractérisé en ce que** des deux côtés du plan d'appui (3) pour la plaque de verre (2) est disposée chaque fois une buse à plasma (5, 6), les deux buses à plasma (5, 6) formant une paire et les faces frontales (18, 20) de ces deux buses (5, 6) étant orientées l'une vers l'autre, un capteur de distance (23, 24) qui détermine une distance minimale (29) entre la face frontale (18, 20) de la buse à plasma (5, 6) et la surface (37, 38) de la plaque de verre (2) étant disposé sur chaque buse à plasma (5, 6) et une distance libre (27) qui correspond au moins à la somme de l'épaisseur (26) de la plaque de verre (2) plus le double de la distance minimale (29) de la face frontale (18, 20) de la buse à plasma (5, 6) plus une valeur de déplacement admissible (31) existant entre les deux faces frontales (18, 20) des buses (5, 6) de la paire de buses.

7. Dispositif selon la revendication 6, **caractérisé en ce que** le capteur de distance (23, 24) est un écarteur mécanique qui s'étend de la face frontale (18, 20) de la buse à plasma (5, 6) en direction de la surface (37, 38) de la plaque de verre (2) et l'extrémité avant (35, 36) de l'écarteur (23, 24) orientée vers la surface (37, 38) de la plaque de verre (2) présente, dans une position neutre de la plaque de verre (2), une distance libre (28) par rapport à la surface (37, 38) de la plaque de verre (2), cette distance (28) correspondant à la moitié de la valeur de déplacement admissible (31).

8. Dispositif selon la revendication 6 ou 7, **caractérisé en ce que** la valeur de déplacement admissible (31) est déterminée par la différence entre la distance de travail maximale admissible (30) entre la face frontale (18, 20) de la buse à plasma (5, 6) et la surface (37, 38) de la plaque et la distance de travail minimale admissible (29) entre la face frontale (18, 20) de la buse à plasma (5, 6) et la surface (37, 38) de la plaque.

9. Dispositif selon l'une des revendications 6 à 8, **caractérisé en ce que** la buse à plasma (5, 6) présente une tête rotative (32, 33) et le jet de plasma (14, 15) sort au niveau de la face frontale (18, 20) de la tête rotative (32, 33) de manière excentrique par rapport à l'axe de rotation (22).

10. Dispositif selon la revendication 9, **caractérisé en ce que** le capteur de distance ou encore l'écarteur (23, 34) est disposé approximativement au centre de la face frontale (18, 20) de la buse à plasma (5, 6) et dans la zone de l'axe de rotation (22).

11. Dispositif selon la revendication 7, **caractérisé en ce que** la longueur de l'écarteur (23, 24) entre l'extrémité avant (35, 36) et la face frontale (18, 20) de la buse à plasma (5, 6) est au moins aussi grande qu'une distance de travail minimale nécessaire (29) pour le jet de plasma (14, 15) entre l'orifice de sortie (19, 21) et la surface (37, 38) de la plaque de verre (2).

12. Dispositif selon l'une des revendications 7 ou 11, **caractérisé en ce que** le capteur de distance ou encore l'écarteur (23, 24) est constitué d'un élément en matière synthétique thermodurcissable avec une surface de glissement à l'extrémité avant (35, 36).

13. Dispositif selon la revendication 12, **caractérisé en ce que** l'écarteur (23, 24) est formé par une matière du groupe des phénoplastes.

14. Dispositif selon la revendication 6, **caractérisé en ce que** le capteur de distance (23, 24) est un capteur sans contact, ce capteur sans contact est relié à un appareil de commande et l'appareil de commande est relié à un dispositif de réglage (7, 8) qui agit sur la paire de buses à plasma.
